# EUROPÄISCHE PATENTSCHRIFT

(11) **EP 3 892 525 B1**
(45) Veröffentlichungstag und Bekanntmachung des Hinweises auf die Patenterteilung: **16.04.2025**
(21) Anmeldenummer: 21176528.4
(22) Anmeldetag: 01.10.2018
(51) Int. Cl.: B62D 21/15, B62D 33/067, B62D 33/06

(54) **HALTEVORRICHTUNG ZUM SCHWENKBAREN HALTEN EINES FAHRERHAUSES**
HOLDING DEVICE FOR PIVOTABLY SUPPORTING A DRIVER'S CAB
DISPOSITIF DE MAINTIEN DESTINÉ À MAINTENIR PIVOTANTE UNE CABINE DU CONDUCTEUR

(30) Priorität: 17.10.2017 AT 4092017
(43) Veröffentlichungstag der Anmeldung: 13.10.2021
(62) Teilanmeldung aus: 18197828.9
(73) Patentinhaber: MAN Truck & Bus SE, 80995 München (DE)
(72) Erfinder: Gazic, Zeljko, 80686 München (DE); Schindlegger, Markus, 4300 St. Valentin (AT); Wührleitner, Gerhard, 4400 Steyr (AT); Mucha, David, 3001 Mauerbach (AT); Nosratpur, Keivan, 82008 Unterhaching (DE)
(74) Vertreter: v. Bezold & Partner Patentanwälte - PartG mbB

(56) Entgegenhaltungen:
- EP-A2- 0 972 700
- WO-A1-03/101809
- WO-A1-2016/041590
- DE-C1- 10 037 889
- JP-A- 2001 151 162

## Beschreibung

Die Erfindung betrifft eine Haltevorrichtung zum schwenkbaren Halten eines Fahrerhauses an einem Rahmen eines Nutzfahrzeugs.

Halteeinrichtungen zum schwenkbaren Halten von Fahrerhäusern an Rahmen von Nutzfahrzeugen sind aus dem allgemeinen Stand der Technik und insbesondere aus dem Serienfahrzeugbau bereits hinlänglich bekannt. Die Halteeinrichtung umfasst dabei wenigstens zwei gelenkig miteinander verbundene Halteelemente, unter deren Vermittlung das Fahrerhaus an dem Rahmen um eine Schwenkachse relativ zu dem Rahmen verschwenkbar zu halten ist. Ein erstes Halteelement ist beispielsweise eine fahrerhausseitige Konsole, welche im fertig hergestellten Zustand des Nutzfahrzeugs mit dem Fahrerhaus verbunden ist. Ein zweites Halteelement ist beispielsweise eine rahmenseitige Konsole, welche im fertig hergestellten Zustand des Nutzfahrzeugs mit dem Rahmen verbunden ist.

Die EP 0 972 700 A2 betrifft eine vordere Lagerung eines kippbaren Fahrerhauses eines Lastkraftwagens. Dabei ist das Fahrerhaus vorne auf zwei Anschlusskonsolen befestigt, mit diesen an zwei Feder-Dämpfer-Beinen angelenkt, über diese gegenüber dem Fahrgestell-Rahmen abgefedert, und außerdem an einer U-förmigen Stabilisatorschwinge quergeführt. Die Stabilisatorschwinge ist dabei im Bereich ihrer hinteren Enden an Lagerböcken angelenkt, die derart am Fahrgestell-Rahmen befestigt und/oder ausgebildet sind, dass sie im Frontalcrashfall gezielt nachgiebig und/oder deformierbar sind. Eine Querstange verbindet die zwei Anschlusskonsolen stabilisierend.

Die DE 10 2006 008 090 A1 offenbart einen Lastkraftwagen mit einer vorderen Fahrerhauslagerung eines Fahrerhauses an einem Fahrzeugrahmen, an dem eine Stabilisatorschwinge über Lagerkonsolen einer Stützanordnung gehalten ist. Die Stützanordnung umfasst eine energieabsorbierende Einrichtung zur Aufnahme von Aufprallenergie infolge eines Frontalaufpralls des Lastkraftwagens im Bereich des Fahrerhauses. Der energieabsorbierenden Einrichtung der Stützanordnung ist wenigstens ein Stützelement zugeordnet, über welches ein Stabilisatorrohr der Stabilisatorschwinge am Fahrzeugrahmen abzustützen ist.

Die DE 100 37 889 C1 offenbart eine gattungsgemäße Kippvorrichtung für ein Fahrerhaus. Um die Unfallfolgen für Personen bei Nutzfahrzeugen mit kippbaren Fahrerhäusern zu reduzieren, weist eine Konsole zwei oder mehrere horizontal steife Bereiche auf, zwischen denen Bereiche angeordnet sind, die vertikal steif und horizontal gezielt plastisch verformbar ausgebildet sind.

Die WO 2016/041590 A1 offenbart eine Fahrerkabine eines Lastkraftwagens mit einem Rahmen. Die Kabine weist eine A-Säule und eine B-Säule auf. Die Kabine weist eine Kabinenstärke auf, die als die Kraftstufe definiert ist, oberhalb derer eine auf die A-Säule in Richtung der B-Säule wirkende Kraft bewirkt, dass die A-Säule durch dauerhafte Kabinenverformung näher an die B-Säule herantreibt. Die Kabine ist am Rahmen durch eine Verbindungsstruktur mit einer ersten Verbindungsvorrichtung befestigt, die so angeordnet ist, dass, wenn die Kabine im Falle einer Frontalkollision auf ein Hindernis auftrifft, in der ersten Verbindungsvorrichtung ein Bruch auftritt, wenn eine Schwellenkraft zwischen der Kabine und dem Rahmen in einer ersten Phase der Kollision überschritten wird. Die erste Verbindungsvorrichtung ermöglicht nach dem Bruch eine Rückwärtsbewegung der Kabine in Bezug auf den Rahmen mit einer geringen Kraftübertragung zwischen Kabine und Rahmen unterhalb der Schwellenkraft für einen vorbestimmten Rückwärtsbewegungsabstand der B-Säule in einer zweiten Phase der Kollision.

Die WO 03/101809 A1 offenbart ein Fahrzeug mit einem Fahrgestell und einer Kabine, die auf dem Fahrgestell abgestützt ist und an ihrem unteren Ende eine Lagerplatte aufweist, die an einer Kabinenhalterung mit einem Drehgelenk befestigt ist. Die Kabinenhalterung und die Lagerplatte sind in Fahrzeugrichtung über ein vorderes starres Gelenk und mindestens ein hinteres verformbares Gelenk miteinander verbunden. Eine Verformungsstruktur mit einer starren Halterung und einem Bolzen ist an der Halterung befestigt und verläuft durch eine in einer verformbaren Platte angeordnete Durchführung. Die Geometrie der Durchführung ist derart, dass sie den Bolzen in radialer Richtung rechtwinklig zu einer Längsachse durch den Bolzen fixiert, wobei der Bolzen einen Vorsprung in Form eines Kopfes, einer Unterlegscheibe oder einer Mutter aufweist, der an der Platte zur Befestigung der Platte in axialer Richtung anliegt.

Die DE 10 2015 009 474 A1 betrifft eine Halteeinrichtung zum schwenkbaren Halten eines Fahrerhauses an einem Rahmen eines Nutzfahrzeugs, mit wenigstens zwei gelenkig miteinander verbundenen Halteelementen, unter deren Vermittlung das Fahrerhaus an dem Rahmen um eine Schwenkachse relativ zu dem Rahmen verschwenkbar zu halten ist. Zumindest eines der Halteelemente weist wenigstens einen Energieabsorptionsbereich auf, welcher bei einer unfallbedingten Kraftbeaufschlagung unter Energieverzehrung verformbar ist. Der Energieabsorptionsbereich ist in eine Konsole integriert, die durch Urformen hergestellt ist.

Der Erfindung liegt die Aufgabe zu Grunde, eine alternative oder verbesserte Haltevorrichtung zum schwenkbaren Halten eines Fahrerhauses vorzusehen. Insbesondere soll die Haltevorrichtung ein verbessertes Unfallverhalten, eine verbesserte Montierbarkeit und/oder eine Individualisierbarkeit bzw. Anpassbarkeit aufweisen.

Die Aufgabe wird gelöst durch eine Haltevorrichtung gemäß dem unabhängigen Anspruch. Vorteilhafte Weiterbildungen sind in den abhängigen Ansprüchen und der Beschreibung angegeben.

Die Haltevorrichtung ist zum schwenkbaren Halten eines Fahrerhauses an einem Fahrzeugrahmen eines Nutzfahrzeugs geeignet. Die Haltevorrichtung weist ein erstes fahrerhausseitiges Halteelement (zum Beispiel einen ersten Lagerbock) zum Befestigen an dem Fahrerhaus (zum Beispiel an einem Fahrerhausboden des Fahrerhauses) auf. Die Haltevorrichtung weist ein erstes rahmenseitiges Halteelement (zum Beispiel einen ersten Schwingenarm) zum Befestigen an dem Fahrzeugrahmen auf. Das erste fahrerhausseitige Halteelement und das erste rahmenseitige Halteelement sind zum Schwenken des Fahrerhauses gelenkig (zum Beispiel schwenkbar) miteinander verbunden. Die Haltevorrichtung weist ein erstes Crashelement auf, das lösbar an dem ersten fahrerhausseitigen Halteelement befestigt ist.

Die lösbare Anbringung des ersten Crashelements an dem ersten fahrerhausseitigen Halteelement kann insbesondere eine Montierbarkeit verbessern. Zunächst kann das Fahrerhaus an dem ersten fahrerhausseitigen Halteelement befestigt werden. Das erste Crashelement kann erst danach an dem fahrerhausseitigen Halteelement befestigt werden. Damit stört das erste Crashelement nicht bei der Montage des Fahrerhauses am fahrerhausseitigen Halteelement. Die lösbare Anbringung des ersten Crashelements kann zudem ermöglichen, dass das erste Crashelement an geänderte Crashanforderungen angepasst werden kann, ohne dass das fahrerhausseitige Halteelement abgeändert werden muss.

Wie hierin verwendet, bezieht sich der Begriff "Crashelement" auf eine Struktur, die im Wesentlichen dazu vorgesehen ist, bei einem Unfall, insbesondere einem Frontalcrash, gezielt nachgiebig und deformierbar zu sein, um Aufprallenergie infolge des Unfalls aufzunehmen. In einigen Ausführungsformen kann das Crashelement weitere untergeordnete Aufgaben beispielsweise als Halterung für Leitungen oder als Stabilisierung übernehmen.

In einem Ausführungsbeispiel erstreckt sich das erste Crashelement ausgehend von dem ersten fahrerhausseitigen Halteelement in einer Vertikalrichtung nach oben. Damit kann das erste Crashelement beispielsweise schützend vor einem Fahrerhausboden des Fahrerhauses angeordnet werden.

In einem nicht in den Ansprüchen aufgeführtem Ausführungsbeispiel ist das erste Crashelement in einer Vorwärtsfahrtrichtung des Nutzfahrzeugs von vorne an dem ersten fahrerhausseitigen Halteelement lösbar befestigt. Alternativ oder zusätzlich ist das erste Crashelement bezüglich einer Vorwärtsfahrtrichtung des Nutzfahrzeugs an einer vorderen Stirnfläche des ersten fahrerhausseitigen Halteelements lösbar befestigt. Hierbei dient das erste Crashelement insbesondere als ein Crashelement bei Frontalunfällen. Zusätzlich ergibt sich eine leichte Montierbarkeit des ersten Crashelements am ersten fahrerhausseitigen Halteelement.

In einer Ausführungsvariante steht das erste Crashelement in einer Vertikalrichtung nach oben über das erste fahrerhausseitige Halteelement hinaus über. Damit kann das erste Crashelement bei einem Unfall eine Aufprallenergie in einem Bereich aufnehmen, in dem das erste fahrerhausseitige Halteelement nicht vorgesehen ist.

In einer weiteren Ausführungsvariante liegt das erste Crashelement in einer Vertikalrichtung oberhalb von dessen lösbarer Befestigung an dem ersten fahrerhausseitigen Halteelement bündig an. Damit kann eine wirksame Kraftübertragung zwischen dem ersten Crashelement und dem ersten fahrerhausseitigen Halteelement gewährleistet werden.

In einer Ausführungsform sind das erste Crashelement und das erste fahrerhausseitige Halteelement aus demselben Material hergestellt. Alternativ sind das erste Crashelement und das erste fahrerhausseitige Halteelement aus unterschiedlichen Materialien hergestellt.

Dies ermöglicht beispielsweise eine materialspezifische Anpassung des ersten Crashelements an jeweilige Crash-Anforderungen.

In einer weiteren Ausführungsform weist das erste Crashelement mehrere Verstärkungsrippen auf.

In einer Ausführungsvariante ist das erste Crashelement aus kohlenstofffaserverstärktem Kunststoff oder einem Metall hergestellt.

In einer weiteren Ausführungsvariante ist die Haltevorrichtung modular ausgebildet ist, sodass das erste Crashelement aus einer Gruppe von ersten Crashelementen auswählbar ist, die sich in einer Festigkeit, einer Belastbarkeit, einer Form und/oder einem Material unterscheiden. Damit kann beispielsweise dasjenige erste Crashelement ausgewählt werden, das am besten an die jeweiligen Crash-Anforderungen angepasst ist.

Erfindungsgemäß weist die Haltevorrichtung ein zweites fahrerhausseitiges Halteelement (zum Beispiel einen zweiten Lagerbock) zum Befestigen an dem Fahrerhaus (zum Beispiel einem Fahrerhausboden des Fahrerhauses) auf. Die Haltevorrichtung weist erfindungsgemäß ein zweites rahmenseitiges Halteelement (zum Beispiel einen zweiten Schwingenarm) zum Befestigen an dem Fahrzeugrahmen auf. Das zweite fahrerhausseitige Halteelement und das zweite rahmenseitige Halteelement sind zum Schwenken des Fahrerhauses gelenkig (zum Beispiel schwenkbar) miteinander verbunden. Die Haltevorrichtung weist erfindungsgemäß ein zweites Crashelement auf, das lösbar an dem zweiten fahrerhausseitigen Halteelement befestigt ist.

Beispielsweise können das erste fahrerhausseitige Halteelement, das erste rahmenseitige Halteelement und das erste Crashelement auf einer gegenüberliegenden Fahrzeugseite zu dem zweiten fahrerhausseitigen Halteelement, dem zweiten rahmenseitigen Halteelement und dem zweiten Crashelement ausgebildet sein.

Zum Beispiel kann das erste fahrerhausseitige Halteelement und/oder das zweite fahrerhausseitige Halteelement ein Gussteil (zum Beispiel Grauguss oder Aluguss) sein.

Insbesondere können das erste Crashelement und das zweite Crashelement spiegelsymmetrisch bezüglich einer entlang einer Fahrzeuglängsrichtung des Nutzfahrzeugs ausgerichteten Mittelvertikalebene ausgebildet sein.

In einem nicht in den Ansprüchen aufgeführtem Ausführungsbeispiel kann sich das zweite Crashelement ausgehend von dem zweiten fahrerhausseitigen Halteelement in einer Vertikalrichtung nach oben erstrecken, in einer Vorwärtsfahrtrichtung des Nutzfahrzeugs von vorne an dem zweiten fahrerhausseitigen Halteelement lösbar befestigt sein, bezüglich einer Vorwärtsfahrtrichtung des Nutzfahrzeugs an einer vorderen Stirnfläche des zweiten fahrerhausseitigen Halteelements lösbar befestigt sein und/oder in einer Vertikalrichtung nach oben über das zweite fahrerhausseitige Halteelement hinaus überstehen.

Bevorzugt kann das zweite Crashelement in einer Vertikalrichtung oberhalb von dessen lösbarer Befestigung an dem zweiten fahrerhausseitigen Halteelement bündig anliegen, aus dem gleichen Material wie das erste Crashelement hergestellt sein und/oder mehrere Verstärkungsrippen aufweisen.

Es besteht die Möglichkeit, dass die Haltevorrichtung auch bezüglich des zweiten Crashelements modular ausgebildet, sodass das zweite Crashelement aus einer Gruppe von zweiten Crashelementen auswählbar ist, die sich in einer Festigkeit, einer Belastbarkeit, einer Form und/oder einem Material unterscheiden.

Es ist möglich, dass das erste Crashelement mittels mindestens einer Schraube am ersten fahrerhausseitigen Halteelement lösbar befestigt ist. Ebenso kann das zweite Crashelement mittels mindestens einer Schraube am zweiten fahrerhausseitigen Halteelement lösbar befestigt sein.

Es ist auch möglich, dass das erste rahmenseitige Halteelement und/oder das zweite rahmenseitige Halteelement als Schwingenarm einer Schwingenvorrichtung bzw. Stabilisatorschwinge vorgesehen ist.

Erfindungsgemäß weist die Haltevorrichtung einen Steg auf, der sich zwischen dem ersten Crashelement und dem zweiten Crashelement erstreckt. Vorzugsweise ist der Steg in einer Vertikalrichtung oberhalb des ersten fahrerhausseitigen Halteelements und des zweiten fahrerhausseitigen Halteelements angeordnet. Der Steg ermöglicht, dass auch der Bereich zwischen dem ersten Crashelement und dem zweiten Crashelement geschützt wird. Insbesondere kann der Steg ebenfalls als Crashelement wirkend ausgebildet sein.

In einer ersten erfindungsgemäßen Variante sind das erste Crashelement, der Steg und das zweite Crashelement integral aus einem Stück herstellt. In einer zweiten erfindungsgemäßen Variante sind das erste Crashelement, der Steg und das zweite Crashelement lösbar aneinander befestigt.

Die Erfindung betrifft auch ein Nutzfahrzeug, insbesondere einen Lastkraftwagen. Das Nutzfahrzeug weist ein Fahrerhaus, einen Fahrzeugrahmen und eine Haltevorrichtung wie hierin offenbart auf. Die Haltevorrichtung lagert das Fahrerhaus schwenkbar am Fahrzeugrahmen.

Vorzugsweise sind die fahrerhausseitigen Halteelemente jeweils an vorderen Stirnflächen des Fahrerhausbodens des Fahrerhauses und Bodenflächen des Fahrerhausbodens des Fahrerhauses angeschraubt.

In einer Ausführungsform greift das erste Crashelement und/oder das zweite Crashelement in eine Blechstruktur des Fahrerhauses (zum Beispiel eine Blechstruktur eines Fahrerhausbodens des Fahrerhauses) ein. Damit können die Crashelemente zum Schützen des Fahrerhauses angeordnet sein.

In einer weiteren Ausführungsform liegt das erste Crashelement und/oder das zweite Crashelement bündig am Fahrerhaus an. Alternativ ist das erste Crashelement und/oder das zweite Crashelement mit einem Spalt kleiner 10 mm, insbesondere kleiner 5 mm, vorzugsweise ungefähr 1 mm, zum Fahrerhaus beabstandet. Dies kann eine Montierbarkeit verbessern und größere Herstellungstoleranzen zulassen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht einer Haltevorrichtung, die ein Fahrerhaus schwenkbar mit einem Rahmen verbindet, gemäß einem ersten Ausführungsbeispiel der vorliegenden Offenbarung;
- Figur 2: eine perspektivische Detailansicht eines ersten fahrerhausseitigen Halteelements und eines ersten Crashelements gemäß dem ersten Ausführungsbeispiel der vorliegenden Offenbarung;
- Figur 3: eine perspektivische Detailansicht eines zweiten fahrerhausseitigen Halteelements und eines zweiten Crashelements gemäß dem ersten Ausführungsbeispiel der vorliegenden Offenbarung;
- Figur 4: eine perspektivische Ansicht einer Haltevorrichtung, die ein Fahrerhaus schwenkbar mit einem Rahmen verbindet, gemäß einem zweiten Ausführungsbeispiel der vorliegenden Offenbarung; und
- Figur 5: eine perspektivische Detailansicht eines einteiligen Crashelements gemäß dem zweiten Ausführungsbeispiel der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

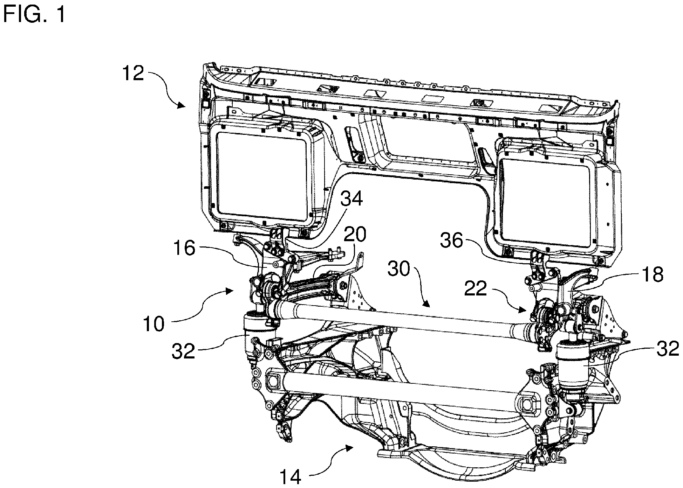

Die Figur 1 zeigt eine Haltevorrichtung 10. Die Haltevorrichtung 10 verbindet einen Bereich eines Fahrerhauses 12 eines Nutzfahrzeugs, insbesondere eines Lastkraftwagens, schwenkbar mit einem Fahrzeugrahmen (Chassis) 14 des Nutzfahrzeugs. Zur besseren Darstellbarkeit ist in der Figur 1 u.a. ein Boden des Fahrerhauses 12 nicht dargestellt.

Die Haltevorrichtung 10 weist ein erstes fahrerhausseitiges Halteelement 16, ein zweites fahrerhausseitiges Halteelement 18, ein erstes rahmenseitiges Halteelement 20 und ein zweites rahmenseitiges Halteelement 22 auf. Zum schwenkbaren Halten des Fahrerhauses 12 an dem Fahrzeugrahmen 14 sind die Halteelemente 16 und 20 sowie die Halteelemente 18 und 22 schwenkbar miteinander verbunden.

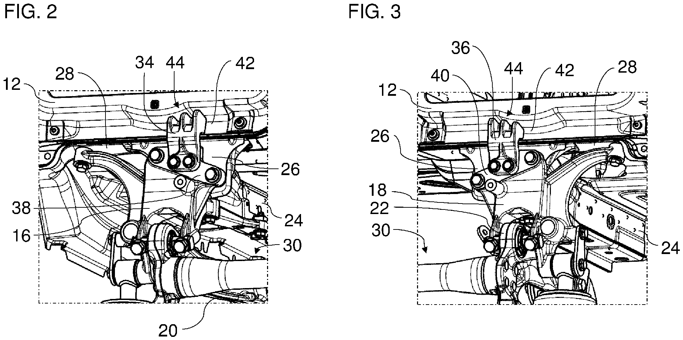

Das erste fahrerhausseitige Halteelement 16 und das zweite fahrerhausseitige Halteelement 18 sind an dem Fahrerhaus 12 befestigt. Insbesondere sind die Halteelemente 16, 18 mit einem Fahrerhausboden 24 (siehe Figuren 2 und 3) verschraubt. Im Einzelnen sind die Halteelemente 16, 18 jeweils an vorderen Stirnflächen 26 des Fahrerhausbodens 24 und Bodenflächen 28 des Fahrerhausbodens 24 angeschraubt (siehe ebenfalls Figuren 2 und 3). Das erste fahrerhausseitige Halteelement 16 und das zweite fahrerhausseitige Halteelement 18 sind als Lagerböcke für das Fahrerhaus 12 ausgebildet.

Das erste rahmenseitige Halteelement 20 und das zweite rahmenseitige Halteelement 22 sind an dem Fahrzeugrahmen 14 befestigt. Insbesondere sind die Halteelemente 20, 22 mit dem Fahrzeugrahmen 14 verschraubt. Die Halteelemente 20 und 22 sind als Schwingenarme einer Fahrerhaus-Schwingenvorrichtung (Stabilisatorschwinge) 30 ausgebildet.

Zusätzlich kann das Fahrerhaus 12 beispielsweise über Luftfederbeine 32 oder andere Federelemente der Fahrerhauslagerung gefedert und gedämpft am Fahrzeugrahmen 14 angebracht sein.

Wie in den Figuren 1 bis 3 gezeigt ist, weist die Haltevorrichtung 10 zudem ein erstes Crashelement 34 und ein zweites Crashelement 36 auf. Grundsätzlich besteht die Hauptaufgabe der Crashelemente 34, 36 darin, bei einem Frontalcrash gezielt nachgiebig und deformierbar zu sein, um Aufprallenergie infolge eines Frontalaufpralls des Nutzfahrzeugs im Bereich des Fahrerhausbodens 24 aufzunehmen.

Das erste Crashelement 34 ist lösbar an dem ersten fahrerhausseitigen Halteelement 16 beispielsweise über zwei Schrauben befestigt. Das zweite Crashelement 36 ist lösbar an dem zweiten fahrerhausseitigen Halteelement 18 beispielsweise über zwei Schrauben befestigt.

Die lösbare Befestigung der Crashelemente 34, 36 an den Halteelementen 16, 18 bietet die Möglichkeit einer anforderungsspezifischen Anpassung der Crashelemente 34, 36. Mit anderen Worten gesagt, können die Crashelemente 34, 36 jeweils aus einer Gruppe von zur Verfügung stehenden Crashelementen 34, 36 ausgewählt werden und an den Halteelementen 16, 18 befestigt werden. Die Halteelemente 16, 18 müssen dafür nicht verändert werden. Damit können die Crashelemente 34, 36 an geänderte Crash-Anforderungen angepasst werden. Beispielsweise können die Formen, die Festigkeiten, die Belastbarkeiten und/oder die Materialien der Crashelemente 34, 36 verändert werden. Bspw. kann so ein Modulbaukasten mit mehreren Crashelementen aufgebaut werden, aus denen die Crashelemente 34, 36 anwendungsspezifisch ausgewählt werden.

Zusätzlich bietet die lösbare Befestigung der Crashelemente 34, 36 an den Halteelementen 16, 18 die Möglichkeit einer einfacheren Montage des Fahrerhauses 12 an den Halteelementen 16, 18. Die in einer Vertikalrichtung nach oben über die Halteelemente 16, 18 hinausstehenden Crashelemente 34, 36 behindern die Montage nicht, da sie erst nach der Montage des Fahrerhauses 12 an den Halteelementen 16, 18 angebracht werden. Würden die Crashelemente 34, 36 integral aus einem Stück mit dem jeweiligen Halteelement 16 oder 18 hergestellt sein, so wäre eine Montage des Fahrerhauses 12 an den Halteelementen 16, 18 deutlich aufwendiger oder, bei entsprechender Ausbildung der Crashelemente 34, 36, sogar unmöglich.

In dem gezeigten Ausführungsbeispiel ist das erste Crashelement 34 an einer vorderen Stirnfläche 38 (siehe Figur 2) des ersten fahrerhausseitigen Halteelements 16 befestigt. Gleichermaßen ist das zweite Crashelement 36 an einer vorderen Stirnfläche 40 (siehe Figur 3) des zweiten fahrerhausseitigen Halteelements 18 befestigt. Die Crashelemente 34, 36 erstrecken sich ausgehend von den Halteelementen 16, 18 in einer Vertikalrichtung nach oben. Die Crashelemente 34, 36 ragen über das jeweilige Halteelement 16, 18 in einer Vertikalrichtung nach oben hinaus und überdecken damit einen vorderen Bereich des Fahrerhauses 12.

Die Crashelemente 34, 36 liegen oberhalb der lösbaren Befestigung bündig an den Halteelementen 16, 18 an und greifen im Bereich des Fahrerhauses 12 in eine Blechstruktur 42 des Fahrerhauses 12 ein. Die Crashelemente 34, 36 können beispielsweise an der Blechstruktur 42 anliegen oder mit einem kleinen Spalt, zum Beispiel im Millimeterbereich, zu der Blechstruktur 42 vorgesehen sein. Der kleine Spalt kann den Vorteil einer leichteren Herstell- und Montierbarkeit bieten, da Toleranzen ermöglicht werden. Bei einem Frontalcrash wird das entsprechende Crashelement 34, 36 unter Überwindung des kleinen Spalts in einer Richtung zu der Blechstruktur 42 zur Anlage und Abstützung an der Blechstruktur 42 (siehe Figuren 2 und 3) verformt.

Beispielsweise können die Crashelemente 34, 36 aus einem anderen Material oder aus einem gleichen Material wie die Halteelemente 16, 18 hergestellt sein. Zum Beispiel können die Crashelemente 34, 36 aus einem kohlefaserverstärkten Kunststoff oder eine Metall hergestellt sein.

Zusätzlich können die Crashelemente 34, 36 Verstärkungsrippen 44 (siehe Figuren 2 und 3) zur Verstärkung bei einem Frontalcrash aufweisen.

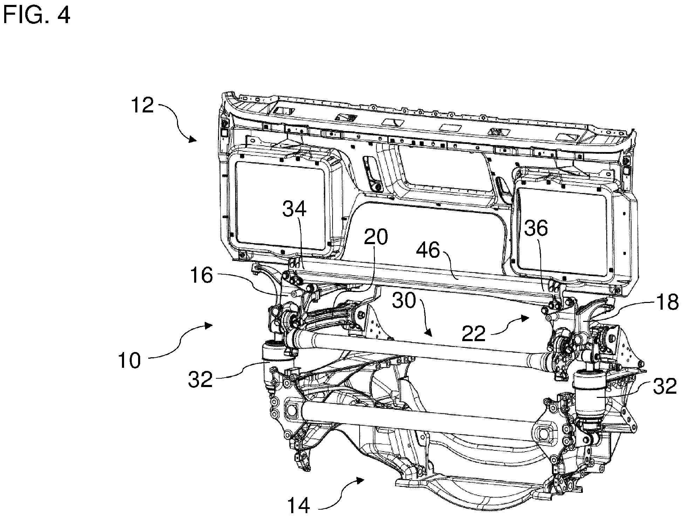

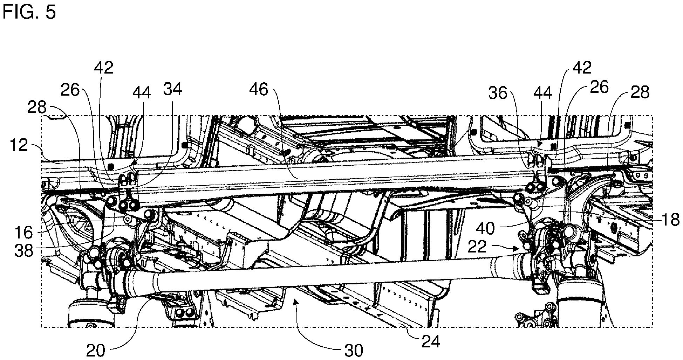

Die Figuren 4 und 5 zeigen ein zweites Ausführungsbeispiel der vorliegenden Offenbarung. Ähnlich zu der Figur 1 ist in der Figur 4 ein Fahrerhausboden, an dem das erste und zweite Halteelement 16, 18 befestigt ist, aus Übersichtsgründen nicht dargestellt.

Das Ausführungsbeispiel der Figuren 4 und 5 zeichnet sich dadurch aus, dass die Crashelemente 34, 36 durch einen als Crashelement wirkenden Steg 46 verbunden sind. Der Steg 46 erstreckt sich in einer Horizontalrichtung zwischen den Crashelementen 34, 36. Die Crashelemente 34, 36 und der Steg 46 können integral aus einem Stück hergestellt sein. Es ist auch möglich, dass die Crashelemente 34, 36 und der Steg 46 lösbar aneinander beispielsweise über mehrere Schrauben befestigt sind.

Damit zeigt das Ausführungsbeispiel der Figuren 4 und 5 auch, dass an unterschiedliche Crashanforderungen angepasste Crashelemente mit den Halteelementen 16, 18 verbunden werden können, ohne dass die Halteelemente 16, 18 und sonstige Elemente der Haltevorrichtung 10 abgeändert werden müssen.

### Bezugszeichenliste

- 10: Haltevorrichtung
- 12: Fahrerhaus
- 14: Fahrzeugrahmen (Chassis)
- 16: Erstes fahrerhausseitiges Halteelement
- 18: Zweites fahrerhausseitiges Halteelement
- 20: Erstes rahmenseitiges Halteelement
- 22: Zweites rahmenseitiges Halteelement
- 24: Fahrerhausboden
- 26: Stirnfläche
- 28: Bodenfläche
- 30: Fahrerhaus-Schwingenvorrichtung
- 32: Luftfederbein
- 34: Erstes Crashelement
- 36: Zweites Crashelement
- 38: Stirnfläche
- 40: Stirnfläche
- 42: Blechstruktur
- 44: Verstärkungsrippen
- 46: Steg

## Patentansprüche

1. Haltevorrichtung (10) zum schwenkbaren Halten eines Fahrerhauses (12) an einem Fahrzeugrahmen (14) eines Nutzfahrzeugs, aufweisend:
ein erstes fahrerhausseitiges Halteelement (16) zum Befestigen an dem Fahrerhaus (12);
ein erstes rahmenseitiges Halteelement (20) zum Befestigen an dem Fahrzeugrahmen (14), wobei das erste fahrerhausseitige Halteelement (16) und das erste rahmenseitige Halteelement (20) zum Schwenken des Fahrerhauses (12) gelenkig miteinander verbunden sind;
ein erstes Crashelement (34), das lösbar an dem ersten fahrerhausseitigen Halteelement (16) befestigt ist;
ein zweites fahrerhausseitiges Halteelement (18) zum Befestigen an dem Fahrerhaus (12);
ein zweites rahmenseitiges Halteelement (20) zum Befestigen an dem Fahrzeugrahmen (14), wobei das zweite fahrerhausseitige Halteelement (18) und das zweite rahmenseitige Halteelement (20) zum Schwenken des Fahrerhauses (12) gelenkig miteinander verbunden sind;
ein zweites Crashelement (36), das lösbar an dem zweiten fahrerhausseitigen Halteelement (18) befestigt ist; und
einen Steg (46), der sich zwischen dem ersten Crashelement (34) und dem zweiten Crashelement (36) erstreckt;
**dadurch gekennzeichnet, dass**
das erste Crashelement (34), der Steg (46) und das zweite Crashelement (36) integral aus einem Stück hergestellt sind; oder
das erste Crashelement (34), der Steg (46) und das zweite Crashelement (36) lösbar aneinander befestigt sind.

2. Haltevorrichtung (10) nach Anspruch 1, wobei:
das erste Crashelement (34) sich ausgehend von dem ersten fahrerhausseitigen Halteelement (16) in einer Vertikalrichtung nach oben erstreckt.

3. Haltevorrichtung (10) nach Anspruch 1 oder Anspruch 2, wobei:
das erste Crashelement (34) in einer Vertikalrichtung nach oben über das erste fahrerhausseitige Halteelement (16) hinaus übersteht.

4. Haltevorrichtung (10) nach einem der vorherigen Ansprüche, wobei:
das erste Crashelement (34) in einer Vertikalrichtung oberhalb von dessen lösbarer Befestigung an dem ersten fahrerhausseitigen Halteelement (16) bündig anliegt.

5. Haltevorrichtung (10) nach einem der vorherigen Ansprüche, wobei:
das erste Crashelement (34) und das erste fahrerhausseitige Halteelement (16) aus demselben Material hergestellt sind; oder
das erste Crashelement (34) und das erste fahrerhausseitige Halteelement (16) aus unterschiedlichen Materialien hergestellt sind.

6. Haltevorrichtung (10) nach einem der vorherigen Ansprüche, wobei:
das erste Crashelement (34) mehrere Verstärkungsrippen (44) aufweist.

7. Haltevorrichtung (10) nach einem der vorherigen Ansprüche, wobei:
das erste Crashelement (34) aus kohlenstofffaserverstärktem Kunststoff oder einem Metall hergestellt ist.

8. Haltevorrichtung (10) nach einem der vorherigen Ansprüche, wobei:
die Haltevorrichtung (10) modular ausgebildet ist, sodass das erste Crashelement (34) aus einer Gruppe von ersten Crashelementen auswählbar ist, die sich in einer Festigkeit, einer Belastbarkeit, einer Form und/oder einem Material unterscheiden; und/oder
die Haltevorrichtung (10) modular ausgebildet ist, sodass das zweite Crashelement (26) aus einer Gruppe von zweiten Crashelementen auswählbar ist, die sich in einer Festigkeit, einer Belastbarkeit, einer Form und/oder einem Material unterscheiden.

9. Haltevorrichtung (10) nach einem der vorherigen Ansprüche, wobei:
der Steg (46) in einer Vertikalrichtung oberhalb des ersten fahrerhausseitigen Halteelements (16) und des zweiten fahrerhausseitigen Halteelements (18) angeordnet ist.

10. Haltevorrichtung (10) nach einem der vorherigen Ansprüche, wobei:
der Steg (46) als Crashelement wirkend ausgebildet ist; und/oder
der Steg (46) ermöglicht, dass ein Bereich zwischen dem ersten Crashelement (34) und dem zweiten Crashelement (36) geschützt ist.

11. Haltevorrichtung (10) nach einem der vorherigen Ansprüche, wobei:
der Steg (46) sich in einer Horizontalrichtung zwischen dem ersten Crashelementen (34) und dem zweiten Crashelement (36) erstreckt.

12. Nutzfahrzeug, insbesondere Lastkraftwagen, aufweisend:
ein Fahrerhaus (12);
einen Fahrzeugrahmen (14); und
eine Haltevorrichtung (10) nach einem der vorherigen Ansprüche, die das Fahrerhaus (12) schwenkbar am Fahrzeugrahmen (14) lagert.

13. Nutzfahrzeug nach Anspruch 12, wobei:
das erste Crashelement (34) und/oder das zweite Crashelement (36) in eine Blechstruktur (42) des Fahrerhauses (12) eingreift.

14. Nutzfahrzeug nach Anspruch 12 oder Anspruch 13, wobei:
das erste Crashelement (34) und/oder das zweite Crashelement (36) bündig am Fahrerhaus (12) anliegt; oder
das erste Crashelement (34) und/oder das zweite Crashelement (36) mit einem Spalt kleiner 10 mm, insbesondere kleiner 5 mm, vorzugsweise ungefähr 1 mm, zum Fahrerhaus (12) beabstandet ist.

## Claims

1. A holding device (10) for pivotably holding a driver's cab (12) on a vehicle chassis (14) of a commercial vehicle, comprising:
a first cab-proximal holding element (16) for fastening to the driver's cab (12);
a first chassis-proximal holding element (20) for fastening to the vehicle chassis (14), wherein the first cab-proximal holding element (16) and the first chassis-proximal holding element (20) are connected to one another in an articulated manner for pivoting the cab (12);
a first crash element (34), which is releasably fastened to the first cab-proximal holding element (16);
a second cab-proximal holding element (18) for fastening to the driver's cab (12);
a second chassis-proximal holding element (20) for fastening to the vehicle chassis (14), wherein the second cab-proximal holding element (18) and the second chassis-proximal holding element (20) are connected to one another in an articulated manner for pivoting the driver's cab (12);
a second crash element (36), which is releasably fastened to the second cab-proximal element (18); and
a crosspiece (46) extending between the first crash element (34) and the second crash element (36);
**characterised in that**
the first crash element (34), the crosspiece (46), and the second crash element (36) are integrally manufactured from one piece; or
the first crash element (34), the crosspiece (46), and the second crash element (36) are releasably fastened to one another.

2. The holding device (10) according to claim 1, wherein:
the first crash element (34), proceeding from the first cab-proximal holding element (16), extends upwards in a vertical direction.

3. The holding device (10) according to claim 1 or 2, wherein:
the first crash element (34), in a vertical direction, projects upwards beyond the first cab-proximal holding element (16).

4. The holding device (10) according to one of the preceding claims, wherein:
the first crash element (34), in a vertical direction above the releasable fastening thereof, bears on the first cab-proximal holding element (16) so as to be flush with the latter.

5. The holding device (10) according to one of the preceding claims, wherein:
the first crash element (34) and the first cab-proximal holding element (16) are produced from the same material; or
the first crash element (34) and the first cab-proximal holding element (16) are produced from different materials.

6. The holding device (10) according to one of the preceding claims, wherein:
the first crash element (34) has a plurality of reinforcement ribs (44).

7. The holding device (10) according to one of the preceding claims, wherein:
the first crash element (34) is produced from carbon fibre-reinforced plastic material or a metal.

8. The holding device (10) according to one of the preceding claims, wherein:
the holding device (10) is of modular configuration so that the first crash element (34) is selectable from a group of first crash elements that differ in terms of strength, load-bearing capability, shape, and/or material; and/or
the holding device (10) is of modular configuration so that the second crash element (26) is selectable from a group of second crash elements that differ in terms of strength, load-bearing capability, shape, and/or material.

9. The holding device (10) according to one of the preceding claims, wherein:
the crosspiece (46) is disposed, in a vertical direction, above the first cab-proximal holding element (16) and the second cab-proximal holding element (18).

10. The holding device (10) according to one of the preceding claims, wherein:
the crosspiece (46) is configured to act as a crash element; and/or
the crosspiece (46) enables an area between the first crash element (34) and the second crash element (36) to be protected.

11. The holding device (10) according to one of the preceding claims, wherein:
the crosspiece (46) extends, in a horizontal direction, between the first crash element (34) and the second crash element (36).

12. A commercial vehicle, in particular a truck, having
a driver's cab (12);
a vehicle chassis (14); and
a holding device (10) according to one of the preceding claims that mounts the driver's cab (12) so as to be pivotable on the vehicle chassis (14).

13. The commercial vehicle according to claim 12, wherein:
the first crash element (34) and/or the second crash element (36) engage/engages in a sheet-metal structure (42) of the driver's cab (12).

14. The commercial vehicle according to claim 12 or claim 13, wherein:
the first crash element (34) and/or the second crash element (36) bear/bears on the driver's cab (12) so as to be flush with the latter; or
the first crash element (34) and/or the second crash element (36) are/is spaced apart from the driver's cab (12) by a gap of less than 10 mm, in particular less than 5 mm, preferably approximately 1 mm.

## Revendications

1. Dispositif de maintien (10) destiné à maintenir de manière pivotante une cabine de conducteur (12) sur un cadre de véhicule (14) d'un véhicule utilitaire, présentant :
un premier élément de maintien (16) côté cabine de conducteur pour la fixation à la cabine de conducteur (12) ;
un premier élément de maintien (20) côté cadre pour la fixation au cadre de véhicule (14), le premier élément de maintien (16) côté cabine de conducteur et le premier élément de maintien (20) côté cadre étant reliés l'un à l'autre de manière articulée pour le pivotement de la cabine de conducteur (12) ;
un premier élément d'absorption de chocs (34) qui est fixé de manière amovible au premier élément de maintien (16) côté cabine de conducteur ;
un deuxième élément de maintien (18) côté cabine de conducteur pour la fixation à la cabine de conducteur (12) ;
un deuxième élément de maintien (20) côté cadre pour la fixation au cadre de véhicule (14), le deuxième élément de maintien (18) côté cabine de conducteur et le deuxième élément de maintien (20) côté cadre étant reliés l'un à l'autre de manière articulée pour le pivotement de la cabine de conducteur (12) ;
un deuxième élément d'absorption de chocs (36) qui est fixé de manière amovible au deuxième élément de maintien (18) côté cabine de conducteur ; et
un élément jointif (46), lequel s'étend entre le premier élément d'absorption de chocs (34) et le deuxième élément d'absorption de chocs (36) ;
**caractérisé en ce que**
le premier élément d'absorption de chocs (34), l'élément jointif (46) et le deuxième élément d'absorption de chocs (36) sont fabriqués intégralement d'une seule pièce ; ou le premier élément d'absorption de chocs (34), l'élément jointif (46) et le deuxième élément d'absorption de chocs (36) sont fixés les uns aux autres de manière amovible.

2. Dispositif de maintien (10) selon la revendication 1, dans lequel :
le premier élément d'absorption de chocs (34) s'étend vers le haut dans une direction verticale à partir du premier élément de maintien (16) côté cabine de conducteur.

3. Dispositif de maintien (10) selon la revendication 1 ou la revendication 2, dans lequel :
le premier élément d'absorption de chocs (34) dépasse au-delà du premier élément de maintien (16) côté cabine de conducteur vers le haut dans une direction verticale.

4. Dispositif de maintien (10) selon l'une des revendications précédentes, dans lequel :
le premier élément d'absorption de chocs (34) est en appui en affleurement contre le premier élément de maintien (16) côté cabine de conducteur au-dessus de sa fixation amovible dans une direction verticale.

5. Dispositif de maintien (10) selon l'une des revendications précédentes, dans lequel :
le premier élément d'absorption de chocs (34) et le premier élément de maintien (16) côté cabine de conducteur sont fabriqués à partir du même matériau ; ou
le premier élément d'absorption de chocs (34) et le premier élément de maintien (16) côté cabine de conducteur sont fabriqués à partir de matériaux différents.

6. Dispositif de maintien (10) selon l'une des revendications précédentes, dans lequel :
le premier élément d'absorption de chocs (34) comprend plusieurs nervures de renforcement (44).

7. Dispositif de maintien (10) selon l'une des revendications précédentes, dans lequel :
le premier élément d'absorption de chocs (34) est fabriqué à partir d'une matière synthétique renforcée par des fibres de carbone ou à partir d'un métal.

8. Dispositif de maintien (10) selon l'une des revendications précédentes, dans lequel :
le dispositif de maintien (10) étant réalisé de manière modulaire, de telle sorte que le premier élément d'absorption de chocs (34) peut être sélectionné à partir d'un groupe de premiers éléments d'absorption de chocs qui diffèrent de par une résistance, une capacité de charge, une forme et/ou un matériau ; et/ou le dispositif de maintien (10) étant réalisé de manière modulaire, de telle sorte que le deuxième élément d'absorption de chocs (26) peut être sélectionné à partir d'un groupe de deuxièmes éléments d'absorption de chocs qui diffèrent de par une résistance, une capacité de charge, une forme et/ou un matériau.

9. Dispositif de maintien (10) selon l'une des revendications précédentes, dans lequel :
l'élément jointif (46) est disposé au-dessus du premier élément de maintien (16) côté cabine de conducteur et du deuxième élément de maintien (18) côté cabine de conducteur dans une direction verticale.

10. Dispositif de maintien (10) selon l'une des revendications précédentes, dans lequel :
l'élément jointif (46) est réalisé de manière à agir en tant qu'élément d'absorption de chocs ; et/ou l'élément jointif (46) permet qu'une région entre le premier élément d'absorption de chocs (34) et le deuxième d'absorption de chocs (36) soit protégée.

11. Dispositif de maintien (10) selon l'une des revendications précédentes, dans lequel :
l'élément jointif (46) s'étend entre le premier élément d'absorption de chocs (34) et le deuxième d'absorption de chocs (36) dans une direction horizontale.

12. Véhicule utilitaire, en particulier poids lourd, présentant :
une cabine de conducteur (12) ;
un cadre de véhicule (14) ; et
un dispositif de maintien (10) selon l'une des revendications précédentes, lequel supporte la cabine de conducteur (12) de manière pivotante sur le cadre de véhicule (14).

13. Véhicule utilitaire selon la revendication 12, dans lequel :
le premier élément d'absorption de chocs (34) et/ou le deuxième élément d'absorption de chocs (36) vien(nen)t en prise dans une structure en tôle (42) de la cabine de conducteur (12).

14. Véhicule utilitaire selon la revendication 12 ou la revendication 13, dans lequel :
le premier élément d'absorption de chocs (34) et/ou le deuxième élément d'absorption de chocs (36) est/sont en appui en affleurement contre la cabine de conducteur (12) ; ou
le premier élément d'absorption de chocs (34) et/ou le deuxième élément d'absorption de chocs (36) est/sont espacé(s) de la cabine de conducteur (12) d'un interstice inférieur à 10 mm, en particulier inférieur à 5 mm, de préférence d'approximativement 1 mm.
